# EUROPEAN PATENT APPLICATION

(11) **EP 4 582 521 A1**
(43) Date of publication of application: **09.07.2025**
(21) Application number: 24217921.6
(22) Date of filing: 05.12.2024
(51) Int. Cl.: C10L 3/08, C10L 3/10, C01B 3/50, F27D 17/20

(54) **CARBON-CARBON (C/C) CHEMICAL VAPOR INFILTRATION (CVI) SYSTEM FOR MANUFACTURING C/C BRAKES WITH NEAR ZERO CARBON EMISSION**

(30) Priority: 02.01.2024 US 202418402503
(71) Applicant: Goodrich Corporation, Charlotte, NC 28217-4578 (US)
(72) Inventor: SHE, Ying, Rocky Hill, CT (US); EMERSON, Sean C., Broad Brook, CT (US); CORDATOS, Haralambos, Colchester, CT (US); DARDAS, Zissis A., Worcester, MA (US); HALL, Daniel, Pueblo, CO (US); SMITH, Kenneth D., East Longmeadow, MA (US); SUTTON, Leah Patrice, Pueblo, CO (US); YOUNG, Michael N., Colorado Springs, CO (US)
(74) Representative: Dehns

(57) **Abstract**

A system is provided for carbon dioxide (CO₂) emission recovery. The system includes a methanization reactor (428). The methanization reactor (428) is configured to receive CO₂ separated from one or more off gases of a brake manufacturing process, receive hydrogen (H₂) produced from an electrolysis process, convert the CO₂ and the H₂ via methanization reaction to produce methane (CH₄), and supply the produced CH₄ to at least one of a carbon/carbon (C/C) preform production process or another system for heat generation.

## Description

### FIELD

The present disclosure relates generally to carbon dioxide (CO₂) emission recovery, and more particularly, carbon-carbon (C/C) chemical vapor infiltration (CVI) system for manufacturing C/C brakes with near zero carbon emission.

### BACKGROUND

Composite bodies are utilized in various industries, including the aerospace industry. The composite bodies start with a preform that is formed using layers of textile material. Aircraft C/C brake manufacturing is one point source of carbon dioxide (CO₂) emissions. Other point sources of CO₂ emissions may include thermal protections systems and shaped composite bodies, among others. In such manufacturing, sustainability goals may be to reduce CO₂ emissions by a predetermined percentage by a future date. However, capturing CO₂ emissions is not only expensive but CO₂ emissions can also be problematic to store. This is especially true for CO₂ emission sources that do not generate enough CO₂ emissions to justify use of a pipeline for underground sequestration.

### SUMMARY

According to various embodiments of the present disclosure, a system for carbon dioxide (CO₂) emission recovery is provided. The system includes a methanization reactor, wherein the methanization reactor is configured to receive CO₂ separated from one or more off gases of a carbon/carbon (C/C) preform production process, receive hydrogen (H₂) produced from an electrolysis process, convert the CO₂ and the H₂ via methanization reaction to produce methane (CH₄), and supply the CH₄ to at least one of the carbon/carbon (C/C) preform production process or another system for heat generation.

In various embodiments, the system further includes an H₂ generator. In various embodiments, the H₂ generator is configured to utilize electric power to electrolyze first water (H₂O) into the H₂.

In various embodiments, the system further includes a separator. In various embodiments, the separator is configured to separate the CO₂ from byproducts and provides the CO₂ to the methanization reactor.

In various embodiments, the system further includes a steam removal mechanism. In various embodiments, the separator is further configured to provide remaining byproducts separated from the byproducts to the steam removal mechanism and the steam removal mechanism is configured to remove first steam from the remaining byproducts and supply the first steam to a condenser.

In various embodiments, the system further includes the condenser. In various embodiments, the methanization reactor is configured to produce second steam and supply the second steam to the condenser and the condenser is configured to condense the first steam and the second steam to the first H₂O and supply the first H₂O to the H₂ generator.

In various embodiments, the steam removal mechanism is further configured to remove nitrogen (N₂) from the remaining byproducts and releases the N₂ into an atmosphere.

In various embodiments, the system further includes a burner/steam generator. In various embodiments, the burner/steam generator is configured to generate the byproducts from off gases and supply the byproducts to the separator.

In various embodiments, the system further includes at least one steam utilization mechanism. In various embodiments, the burner/steam generator further generates third steam and wherein the third steam is supplied to the at least one steam utilization mechanism.

In various embodiments, the system further includes a steam condenser. In various embodiments, unused steam from the at least one steam utilization mechanism is supplied to the steam condenser and the steam condenser is configured to condense the unused steam to second H₂O and supply the second H₂O to the burner/steam generator.

In various embodiments, the H₂ generator is further configured to utilize the electric power to electrolyze the first water (H₂O) into oxygen O₂ and the O₂ from the H₂ generator is proportionally added to air utilized by the burner/steam generator.

Also disclosed herein is a method for carbon dioxide (CO₂) emission recovery. The method includes receiving, by a methanization reactor, CO₂ separated from one or more off gases of a carbon/carbon (C/C) preform production process, receiving, by the methanization reactor, hydrogen (H₂) produced from an electrolysis process, converting, by the methanization reactor, the CO₂ and the H₂ via methanization reaction to produce methane (CH₄), and supplying, by the methanization reactor, the CH₄ to at least one the carbon/carbon (C/C) preform production process or another system for heat generation.

In various embodiments, the method further includes utilizing, by an H₂ generator, electric power to electrolyze first water (H₂O) into the H₂.

In various embodiments, the method further includes separating, by a separator, the CO₂ from byproducts and provide the CO₂ to the methanization reactor.

In various embodiments, the method further includes providing, by the separator, remaining byproducts separated from the byproducts to a steam removal mechanism, removing, by the steam removal mechanism, first steam from the remaining byproducts, and supplying, by the steam removal mechanism, the first steam to a condenser.

In various embodiments, the method further includes producing, by the methanization reactor, second steam, supplying, by the methanization reactor, the second steam to the condenser, condensing, by the condenser, the first steam and the second steam to the first H₂O, and supplying, by the condenser, the first H₂O to the H₂ generator.

In various embodiments, the method further includes removing, by the steam removal mechanism, nitrogen (N₂) from the remaining byproducts, and releasing, by the steam removal mechanism, the N₂ into an atmosphere.

In various embodiments, the method further includes generating, by a burner/steam generator, the byproducts from off gases, and supplying, by the burner/steam generator, the byproducts to the separator.

In various embodiments, the method further includes generating, by the burner/steam generator, third steam, and supplying, by the burner/steam generator, the third steam to at least one steam utilization mechanism.

In various embodiments, the method further includes supplying, by the at least one steam utilization mechanism, unused steam to a steam condenser, condensing, by the steam condenser, the unused steam to second H₂O, and supplying, by the steam condenser, the second H₂O to the burner/steam generator.

In various embodiments, the method further includes utilizing, by the H₂ generator, the electric power to electrolyze first water (H₂O) into oxygen O₂, wherein the O₂ from the H₂ generator is proportionally added to air utilized by the burner/steam generator.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1A illustrates an exemplary aircraft having a brake system, in accordance with various embodiments.
FIG. 1B illustrates a cross-sectional view of a brake assembly, in accordance with various embodiments.
FIG. 2 illustrates a fibrous preform, in accordance with various embodiments.
FIG. 3 illustrates a fibrous preform in a carbonization furnace, in accordance with various embodiments.
FIG. 4 illustrates a system for energy recovery of converting recovered CO₂ into other products, in accordance with various embodiments.
FIG. 5 illustrates a method for CO₂ emission recovery by converting recovered CO₂ into other products, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

In some typical carbon/carbon (C/C) preform production process, such as aircraft C/C brake manufacturing, thermal protections systems, and shaped composite bodies, among others, carbon dioxide (CO₂) emissions account for a substantial percentage of a total CO₂ emissions for some corporations. In such corporations, sustainability goals may be to decarbonize operations, e.g., by reducing CO₂ emissions, by a predetermined percentage by a future date. With particular reference to aircraft C/C brake manufacturing, aircraft C/C brake manufacturing is performed primarily via chemical vapor infiltration (CVI) process. Under high-temperature and low-pressure conditions, C/C CVI is typically operated in a reactor where C-fiber woven preforms are loaded and hydrocarbon gas is introduced. The pyrolysis of the hydrocarbon takes place in the reactor to deposit carbon within the preforms. Typically, C/C CVI brake manufacturing requires many hours to process, and hydrocarbon conversion efficiency is low. Generally, C/C CVI brake manufacturing usually requires about 600 to 2,000 hours with the efficiency of 3% to 24% to densify the preforms to the desirable density. Furthermore, the un-utilized hydrocarbon species may be released to environment as CO₂. Accordingly, a C/C CVI system that may manufacture aircraft C/C brakes with reduced or near zero carbon emission is beneficial.

Disclosed herein are systems and methods for a C/C CVI system for manufacturing C/C brakes with near zero carbon emission. Accordingly, in various embodiments, a natural gas, i.e. methane (CH₄), may be used as feedstock for a C/C CVI process and fed into a C/C preform production process. In various embodiments, exhaust from the C/C preform production process primarily includes unutilized and newly formed various hydrocarbon species. In various embodiments, the various hydrocarbon species are received in a burner/steam generator where combustion of these species generates steam that is used in the C/C preform production process. In various embodiments, after usage of the steam in the C/C preform production process, the steam is condensed back to water that is recycled back to the burner/steam generator. In various embodiments, the exhaust from the steam generator primarily includes carbon dioxide (CO₂), water (H₂O), and nitrogen (N₂), among other off gasses. In various embodiments, a separator separates the CO₂ and feeds the CO₂ into a methanization reactor. In various embodiments, the methanization reactor, using the CO₂ from the separator, along with H₂ from a H₂ generator, forms methane (CH₄). That is, in various embodiments, the H₂ from the H₂ generator may react catalytically with the recovered CO₂ from the separator to form methane (CH₄) via a methanization reaction, i.e., the main species in natural gas:

CO₂ + 4H₂ → CH₄ + 2H₂O

This methanization reaction may also be referred to as a Sabatier reaction. In manufacturing processes, such as preform forming manufacturing, the methanization reaction offers the most straightforward path for management of CO₂ emissions, given that the preform forming manufacturing process already typically utilizes methane (natural gas) for operation.

Additionally, in various embodiments, water (H₂O) produced from the methanization reactor may also be recycled back into the H₂ generator as a water supply via a condenser. The H₂ generator uses electric power to electrolyze the water (H₂O) into hydrogen (H₂) and oxygen (O₂) gases. In various embodiments, the O₂ gas from the H₂ generator may be proportionally added to an air stream utilized by the burner/steam generator for the combustion. In various embodiments, the O₂ enriched air stream provided to the burner/steam generator may increase the combustion efficiency due to a high O₂ concentration in the air stream. In various embodiments, the proposed C/C CVI system for manufacturing C/C brakes, provides a near zero carbon emission because the C/C CVI system only utilizes natural gas, air, and electric power as the input. The output of the C/C CVI system is primarily C/C brakes along with water and nitrogen. Therefore, the C/C CVI system, as described, provides near zero carbon emission.

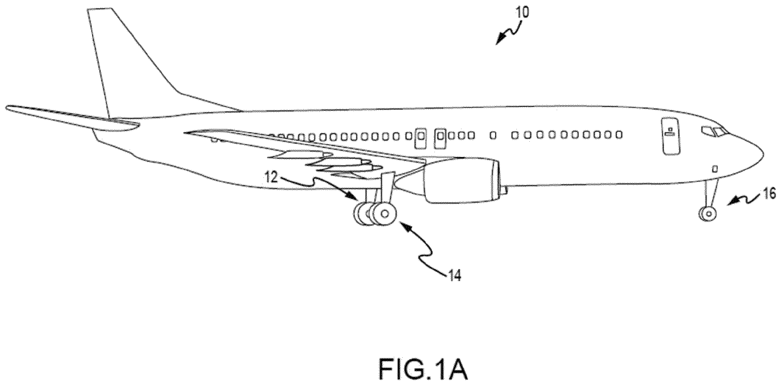

Referring now to FIG. 1A, in accordance with various embodiments, an aircraft 10 is illustrated. The aircraft 10 includes landing gear, which may include a left main landing gear 12, a right main landing gear 14, and a nose landing gear 16. The landing gears support the aircraft 10 when it is not flying, allowing the aircraft 10 to taxi, take off, and land without damage. While the disclosure refers to the three landing gear configurations just described, the disclosure nevertheless contemplates any number of landing gear configurations.

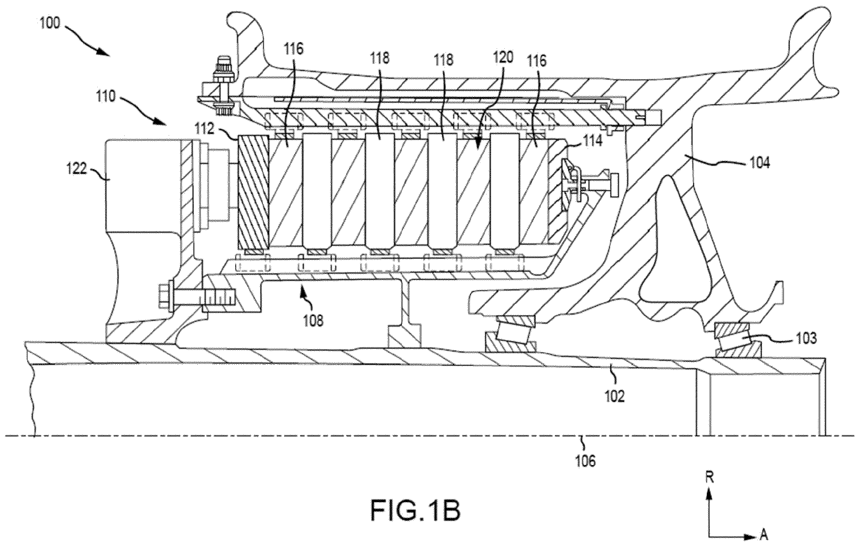

Referring now to FIG. 1B, in accordance with various embodiments, a schematically depicted a brake mechanism 100 is illustrated configured for use on a landing gear, such as, for example, each of the left main landing gear 12 and the right main landing gear 14 described above with reference to FIG. 1A. In various embodiments, the brake mechanism 100 is mounted on an axle 102 for use with a wheel 104 disposed on and configured to rotate about the axle 102 via one or more bearing assemblies 103. A central axis 106 extends through the axle 102 and defines a center of rotation of the wheel 104. As used herein, the term "radial" refers to directions perpendicular to a central axis 106 of fibrous preform, the term "axial" refers to direction parallel to central axis 106, and the term "circumferential" reference to directions about central axis 106. A torque plate barrel 108 (sometimes referred to as a torque tube or a torque plate) is aligned concentrically with the central axis 106, and the wheel 104 is rotatable relative to the torque plate barrel 108.

The brake mechanism 100 includes a piston assembly 110, a pressure plate 112 disposed adjacent the piston assembly 110, an end plate 114 positioned a distal location from the piston assembly 110, and a plurality of rotor disks 116 interleaved with a plurality of stator disks 118 positioned intermediate the pressure plate 112 and the end plate 114. The pressure plate 112, the plurality of rotor disks 116, the plurality of stator disks 118, and the end plate 114 together form a brake heat sink or brake stack 120. The pressure plate 112, the end plate 114, and the plurality of stator disks 118 are mounted to the torque plate barrel 108 and remain rotationally stationary relative to the axle 102. The plurality of rotor disks 116 is mounted to the wheel 104 and rotate with respect to each of the pressure plate 112, the end plate 114, and the plurality of stator disks 118.

An actuating mechanism for the brake mechanism 100 includes a plurality of piston assemblies, including the piston assembly 110, circumferentially spaced around a piston housing 122 (only one piston assembly is illustrated in FIG. 1B). Upon actuation, the plurality of piston assemblies affects a braking action by urging the pressure plate 112 and the plurality of stator disks 118 into frictional engagement with the plurality of rotor disks 116 and against the end plate 114. Through compression of the plurality of rotor disks 116 and the plurality of stator disks 118 between the pressure plate 112 and the end plate 114, the resulting frictional contact slows or stops or otherwise prevents rotation of the wheel 104. In various embodiments, the brake disks of brake mechanism 100 (e.g., rotor disks 116 and the stator disks 118) are fabricated from various composite materials, such as, for example, carbon/carbon (C/C) composite or ceramic matrix composite (CMCs), that enable the brake disks to withstand and dissipate the heat generated during and following a braking action.

In accordance with various embodiments, rotor disks 116 and/or stator disks 118 are each comprised of a carbon-carbon (C/C) material having a high specific heat particulate interspersed throughout the rotor disks 116 and/or stator disks 118, where high specific heat particulate includes any particulate or powder (typically ceramic) that raises the specific heat of the disk above that of C/C composite alone. For example, in various embodiments, the rotor disks 116 and/or stator disks 118 may comprise a C/C composite that includes a percentage of boron, a boron component, or other material having a high specific heat (i.e., a specific heat greater than the specific heat of the C/C composite alone). In various embodiments, rotor disks 116 and/or stator disks 118 may comprise a C/C composite with a percentage of boron carbide (B₄C) disposed substantially throughout the disk.

In various embodiments, the process of interspersing the boron carbide (or other high specific heat component) into the C/C composite is performed by a slurry infiltration process. As described in further detail below, the slurry may infiltrate a fiber preform employed to form the C/C composite in the radial, or in-plane, direction. The slurry may infiltrate via through thickness infiltration of the carbonize preforms. In various embodiments infiltrating in the radial, as opposed to the axial, direction may allow greater volumes and/or larger size particles to be infiltrated. Increasing the volume and/or size of the particles may facilitate the densification process by increasing the surface area available for the matrix material to bond to and by decreasing the open, or empty, volume within the preform. In-plane infiltration may also allow thicker fibrous preforms (e.g., fibrous preforms including a greater number of fiber layers) to be used in the manufacture rotor disks 116 and/or stator disks 118, as the compared to axial infiltration.

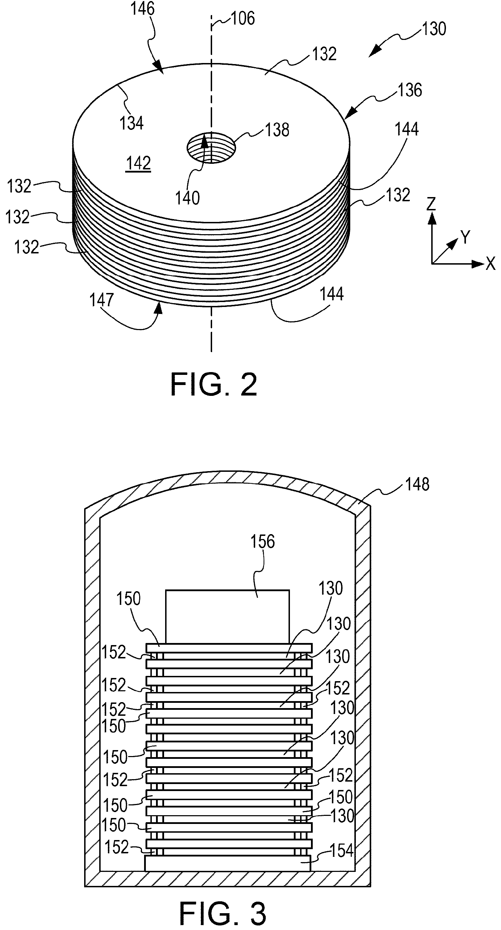

Referring now to FIG. 2, in accordance with various embodiments, a fibrous preform 130 is illustrated. Fibrous preform 130 may be employed to form a rotor disk 116 or a stator disk 118, as described above. Fibrous preform 130 may comprise a porous structure comprised of a plurality of stacked textile layers 132. Each textile layer 132 having a thickness in a first dimension (i.e., the Z-direction) that may be substantially less than a thickness of the layer 132 in the other two dimensions (i.e., the X-direction and the Y-direction). As used herein, the "in-plane" direction refers to directions parallel to the thicker two dimensions (i.e., parallel to the X and Y directions and perpendicular to the Z-direction).

A porous structure may comprise any structure derived from a fibrous material such as carbon fibers or the like. In various embodiments, the carbon fibers may be derived from polyacrylonitrile (PAN), rayon (synthetic fiber derived from cellulose), oxidized polyacrylonitrile fiber (OPF), pitch, or the like. The starting fiber may be pre-oxidized PAN or fully carbonized commercial carbon fiber. Fibrous preform 130 may be prepared by needling the textile layers 132 of fibrous preform 130. Needling the textile layers 132 of fibrous preform 130 tends to push fibers from one layer 132 to the next layer 132, thereby forming z-fibers that extend axially across the layers 132. Needling pulls fibers from the in-plane direction and forces the fibers into the z-fiber direction. After needling, fibrous preform 130 may comprise fibers extending in three different directions: the radial direction, the circumferential direction, and the axial direction (or the X, Y, and Z directions).

Fibrous preform 130 may be fabricated using a net shape preforming technology or may be cut from a needled board. Fibrous preform 130 may be a lay-up of woven, braided or knitted textile layers 132. The fibrous material may be in the form of chopped carbon fibers molded to form layers 132. Prior to the densification process, the fibrous material may be formed into a preform having any desired shape or form. For example, the fibrous preform may be in the form of a disk having any shape such as, for example, a polygon, a cylinder, a triangle, annular, square, rectangle, pentagon, hexagon, octagon, or the like. In various embodiments, layers 132 and fibrous preform 130 may have a generally annular shape. In accordance with various embodiments, the outer circumferential (or outer perimeter) surfaces 134 of layers 132 may form an outer diameter (OD) 136 of fibrous preform 130, and the inner circumferential (or inner perimeter) surfaces 138 of layers 132 may form an inner diameter (ID) 140 of fibrous preform 130. Each layer 132 includes a first axial face 142 and a second axial face 144 opposite the first axial face 142. First and second axial faces 142, 144 extend from outer circumferential surface 134 to inner circumferential surface 138. Layers 132 are stacked such that the first axial face 142 of one layer 132 is oriented toward the second axial face 144 of the adjacent layer 132. First axial face 142 of the uppermost layer 132 forms the upper axial end 146 of fibrous preform 130 and the second axial face 144 of the bottommost layer 132 forms the lower axial end 147 of fibrous preform 130 (i.e., the two layers 132 that are farther apart from one another in the axial direction form the axial ends 146, 147 of the fibrous preform).

As shown in FIG. 3, in accordance with various embodiments, fibrous preforms 130 being placed in a furnace 148 for carbonization is illustrated. The carbonization process may be employed to convert the fibers of the fibrous preforms 130 into pure carbon fibers, as used herein only "pure carbon fibers" means carbon fibers comprised of at least 99% carbon. The carbonization process is distinguished from the densification process described below in that the densification process involves infiltrating the pores of the fibrous preform 130 and depositing a matrix (e.g., carbon, phenolic resin, or any other desired matrix material) within and around the carbon fibers of the fibrous preform, and the carbonization process refers to the process of converting the fibers of the fibrous preform 130 into pure carbon fibers.

In various embodiments, a plurality of fibrous preforms 130 may be placed on top of one another with separator plates 150 and spacing stops 152 disposed between adjacent fibrous preforms 130. For example, the bottommost fibrous preform 130 may be placed on a base plate 154 at the bottom of carbonization furnace 148. A separator plate 150 may be placed on top of the bottommost fibrous preform 130. Another fibrous preform 130 may then be placed on the separator plate 150, and another separator plate 150 may be placed on that fibrous preform 130. A stack of fibrous preforms 130 and separator plates 150 may be constructed in this manner, with each fibrous preform 130 being separated from superjacent and subjacent fibrous preforms 130 by separator plates 150. Stops 152 may be placed between each of the separator plates 150. The stops 152 may comprise a height that is less than the thickness of the fibrous preform 130 prior to carbonization. Stops 152 may define a target thickness of the fibrous preform 130 after carbonization. In that regard, after the stack of fibrous preforms 130 is constructed, and before the carbonization process has started, gaps may exist between the stops 152 and adjacent separator plates 150. During carbonization, a compressive load may be applied to the fibrous preforms 130, thereby compressing the fibrous preforms 130 until stops 152 contact adjacent separator plates 150.

In various embodiments, compressive pressure may be applied to fibrous preforms 130 during the carbonization. The compressive pressure may be applied by placing a weight 156 over fibrous preforms 130, or by applying a compressive load to the fibrous preforms 130 by other suitable means. The compressive pressure may be applied along the direction of the z-fibers. It will be appreciated by those skilled in the art that the mass of weight 156 and/or the compressive force generated by weight 156 may vary depending on the size of fibrous preforms 130, the pre-carbonization fiber volume of fibrous preforms 130, the desired post-carbonization fiber volume of fibrous preforms 130, and/or the number fibrous preforms 130 being compressed. As used herein, "fiber volume" refers the percentage of the total volume of the fibrous preform that is formed by the fibers of the fibrous preform. For example, a fiber volume of 18% means the fibers of the fibrous preform form 18% of the total volume of fibrous preform. In various embodiments, after carbonization, fibrous preform 130 includes a fiber volume of between 10% and 50%. In various embodiments, after carbonization, fibrous preform 130 includes a fiber volume of between 15% and 25%. In various embodiments, fibrous preforms 130 having a low fiber volume may be desirable for the infiltration methods disclosed herein. In various embodiments, after carbonization, fibrous preform 130 may comprise a fiber volume of less than 25%. For example, in various embodiments, after carbonization, fibrous preform 130 may comprise a fiber volume of 21% or, in various embodiments, fibrous preform 130 may comprise a fiber volume of 18%.

After carbonization, fibrous preform 130, may be densified using, for example, CVI. In various embodiments, prior to densification, fibrous preform 130 is infiltrated with a slurry including a high specific heat particulate. For example, in various embodiments, fibrous preform 130 is infiltrated with a ceramic slurry (i.e., a slurry comprised of a liquid carrier and ceramic particulates). In various embodiments, the slurry infiltration process includes preparation of a slurry including a ceramic particulate (e.g., an aqueous B₄C-based slurry) and immersing the carbonized fibrous preform 130 into the slurry for a period of time sufficient for the particulate (e.g., the B₄C) to infiltrate the fibrous preform 130.

The slurry includes sacrificial fibers. For instance, the sacrificial fibers / particulates are mixed into the slurry. The sacrificial fibers may be a polyethylene or polyester fiber such that, in response to heating to carbon CVI temperatures (e.g., 100°F and 205°F (38°C and 96°C)) will burn. In various embodiments, the preform is heated up to 1000°C in order to cause the sacrificial fibers for burn away, or decompose. When the sacrificial fibers are burned away, or decompose, channels are formed, thus improving carbon CVI infiltration. For instance, the channels provide a pathway for the CVI to get to in. However, polyester or polyethylene fibers may be too large to incorporate directly into the B₄C slurry. Accordingly, the sacrificial fibers may be injected into the fibrous preform 130. For instance, the sacrificial fibers may be injected using a syringe or other means, prior to completing B₄C slurry infiltration. By injecting using a syringe, the sacrificial fibers may be distributed in the matrix of the boron carbide.

Slurry may include high specific heat particulate and a liquid carrier (such as, for example, water and/or alcohol). In various embodiments, slurry may further include a high specific heat particulate, a binder (e.g., a polymeric adhesive or polyvinyl acetate), and a liquid carrier (e.g., water). It will be appreciated by those skilled in the art that liquid carriers other than water may be used and that the type and/or volume of liquid carrier and/or of binder may be selected based on the composition of the high specific heat particulate. In various embodiments, slurry may be a B₄C-based slurry and may be prepared by mixing B₄C powder in water with appropriate additives, such as wetting agents and dispersants. The B₄C powder may comprise particulates having an average particle sizes from sub-micron up to about 30 microns. As used in the previous context only, "about" means ± 5 microns.

The slurry further includes the sacrificial fibers. The sacrificial fibers are added to the solution of the slurry. In various embodiments, the sacrificial fibers make up 5% of the slurry solution. In various embodiments, the sacrificial fibers make up 10 % of the slurry solution. For instance, the sacrificial fibers make up .5% - 10% of the slurry. The sacrificial fibers may be a micro polyester particle. The slurry solution may be loaded into the syringe. A user may then use the syringe to inject the slurry, including the sacrificial fibers, into the fibrous preform 130. The user may inject the fibrous preform 130 in a plurality of locations. For instance, the user may inject/poke the fibrous preform 130 at ten locations. In various embodiments, a bank of syringes may be provided to operate as an assembly-line system to prepare multiple fibrous preforms may be injected simultaneously with the sacrificial fibers.

Infiltration using a syringe facilitates achieving a uniform distribution of the sacrificial fibers, which in turn improves carbon CVI infiltration once the fibers are burned around during the heat-up to carbon CVI process temperature. By raising the thermal capacity of the material, more energy may be absorbed per unit mass. Accordingly, the brakes may be manufactured smaller, for instance. Further, the friction and wear characteristics may be improved.

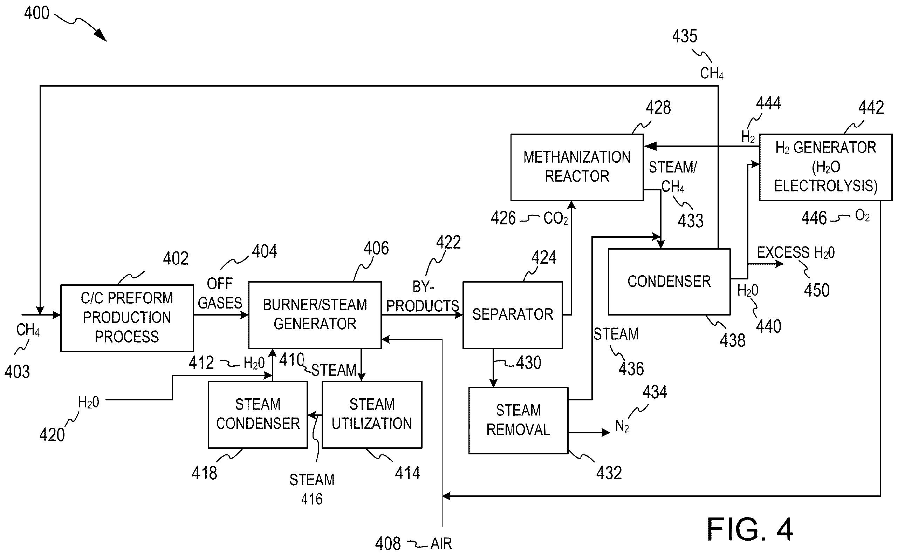

As described previously, the process illustrated and described with respect to FIG. 3 is the emission of off gases that include but are not limited to hydrogen (H₂) and carbon dioxide (CO₂). Referring now to FIG. 4, in accordance with various embodiments, a system 400 for energy recovery of converting recovered CO₂ into other products is illustrated. In various embodiments, the C/C preform production process 402 may be configured to utilize natural gas such as methane (CH₄) 403 to perform various operations in the production of the aircraft brakes. However, in various embodiments, during the C/C preform production process 402, various off gases 404, i.e. hydrocarbons, are produced. Accordingly, in system 400, the C/C preform production process 402 may be configured to feed the various off gases 404, i.e., hydrocarbons, CO₂, H₂, and nitrogen (N₂), among others, into burner/steam generator 406, i.e. a boiler with a burner.

In various embodiments, the burner/steam generator 406 may be configured to burn the various off gases 404 utilizing air 408 to generate steam 410 from incoming water (H₂O) 412. In various embodiments, the steam 410 may be utilized by various steam utilization mechanisms 414 to operate other components of the C/C preform production process 402. In various embodiments, steam 416 that has been used by the various steam utilization mechanisms 414 may be fed to a steam condenser 418 that may be configured to condense the steam to water (H₂O) 412, which is fed back to the burner/steam generator 406. In various embodiments, H₂O 420 may be added to a water loop formed by burner/steam generator 406, steam 410, steam utilization mechanisms 414, steam 416, steam condenser 418, and H₂O 412, when a water loss occurs in the water loop but not continuously. During the operations performed by the burner/steam generator 406, in addition to generating the steam 410, the burner/steam generator 406 generates byproducts 422, such as CO₂, H₂O, and N₂, among others, which the burner/steam generator 406 may be configured to feed into separator 424.

In various embodiments, the separator 424 may be configured to separate the CO₂ 426 from the byproducts 422, which is fed into methanization reactor 428. In various embodiments, the separator 424 may further be configured to send the remaining byproducts 430 to a steam removal mechanism 432. In various embodiments, the steam removal mechanism 432 may be configured to separate the N₂ 434 from the remaining byproducts 430, which may be released into the atmosphere, and may be configured to separate the steam 436 from the remaining byproducts 430, which may be fed into condenser 438. The separator 424 may include one or more of absorption, adsorption, cryogenic distillation, capture by solid sorbents or solvents such as mono-ethanol amine (MEA), or membrane separation, among others for the separation process.

In various embodiments, the condenser 438 may be configured to condense the steam 436 to generate H₂O 440, which may be fed into a H₂ generator 442. In various embodiments, the H₂ generator 442 may be configured to utilize electric power to electrolyze the H₂O 440 into hydrogen (H₂) 444, which is fed to the methanization reactor 428, and oxygen (O₂) 446, which is fed to the burner/steam generator 406. In various embodiments, the methanization reactor 428 may be configured to utilize the incoming H₂ 444 and CO₂ 426 to perform a methanization reaction in order to produce steam mixed with methane (CH₄) (steam/CH₄) 433, which is fed into condenser 438. In that regard, in various embodiments, the condenser 438 may be further configured to separate methane (CH₄) 435 and H₂O 440 from steam/CH₄ 433 during the condensing, feeding the H₂O 440 to the H₂ generator 442 and feeding the CH₄ 435 to the C/C preform production process 402 or another system to perform various operations in the production of the aircraft brakes, such as heat generation.

In various embodiments, the O₂ 446 from the H₂ generator 442 may be proportionally added to the air 408 utilized by the burner/steam generator 406 for the combustion, with excess O₂ 446 either vented or burned depending on conditions. In various embodiments, the O₂ enriched air stream provided to the burner/steam generator 406 may increase the combustion efficiency due to a high O₂ concentration in the air stream. In various embodiments, excess H₂O 450 not utilized by the H₂ generator 442 may be fed back to the burner/steam generator 406 when there is water loss in the water loop previously described. Accordingly, system 400 provides for CO₂ emission recovery by converting the recovered CO₂ into other products that may be utilized by the C/C preform production process 402.

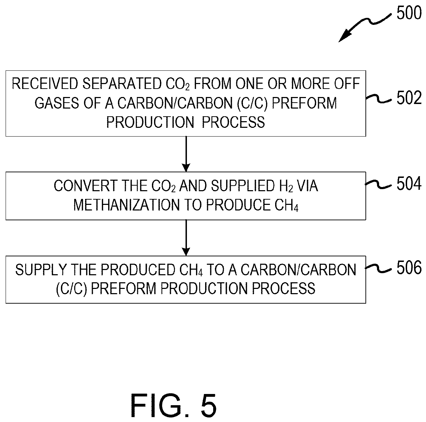

Referring now to FIG. 5, in accordance with various embodiments, a method for CO₂ emission recovery by converting recovered off gases into other products is illustrated. For ease of description, the method 500 is described with reference to FIG. 4. At block 502, a methanization reactor receives CO₂ separated from one or more off gases of a carbon/carbon (C/C) preform production process. At block 504, the methanization reactor converts the CO₂ and supplied H₂ via methanization to produce CH₄. At block 506, the methanization reactor supplies the produced CH₄ to a carbon/carbon (C/C) preform production process.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system for carbon dioxide (CO₂) emission recovery, the system comprising:
a methanization reactor (428), wherein the methanization reactor (428) is configured to:
receive (502) CO₂ separated from one or more off gases of a carbon/carbon (C/C) preform production process;
receive (504) hydrogen (H₂) produced from an electrolysis process;
convert the CO₂ and the H₂ via methanization reaction to produce methane (CH₄); and
supply (506) the CH₄ to at least one of the carbon/carbon (C/C) preform production process or another system for heat generation.

2. The system of claim 1, further comprising:
an H₂ generator (442), wherein the H₂ generator (442) is configured to utilize electric power to electrolyze first water (H₂O) into the H₂.

3. The system of claim 2, further comprising:
a separator (424), wherein the separator (424) is configured to separate the CO₂ from byproducts and provides the CO₂ to the methanization reactor (428), and optionally further comprising:
a steam removal mechanism (432),
wherein the separator (424) is further configured to provide remaining byproducts separated from the byproducts to the steam removal mechanism (432), and
wherein the steam removal mechanism (432) is configured to remove first steam from the remaining byproducts and supply the first steam to a condenser.

4. The system of claim 3, further comprising:
the condenser,
wherein the methanization reactor (428) is configured to produce second steam and supply the second steam to the condenser, and
wherein the condenser is configured to condense the first steam and the second steam to the first H₂O and supply the first H₂O to the H₂ generator (442), and/or wherein the steam removal mechanism (432) is further configured to remove nitrogen (N₂) from the remaining byproducts and releases the N₂ into an atmosphere.

5. The system of claim 3, further comprising:
a burner/steam generator (406), wherein the burner/steam generator (406) is configured to generate the byproducts from off gases and supply the byproducts to the separator (424).

6. The system of claim 5, further comprising:
at least one steam utilization mechanism, wherein the burner/steam generator (406) further generates third steam and wherein the third steam is supplied to the at least one steam utilization mechanism, and optionally further comprising:
a steam condenser,
wherein unused steam from the at least one steam utilization mechanism is supplied to the steam condenser, and
wherein the steam condenser is configured to condense the unused steam to second H₂O and supply the second H₂O to the burner/steam generator (406).

7. The system of claim 6,
wherein the H₂ generator (442) is further configured to utilize the electric power to electrolyze the first water (H₂O) into oxygen O₂, and
wherein the O₂ from the H₂ generator (442) is proportionally added to air utilized by the burner/steam generator (406).

8. A method for carbon dioxide (CO₂) emission recovery, the method comprising:
receiving, by a methanization reactor (428), CO₂ separated from one or more off gases of a carbon/carbon (C/C) preform production process;
receiving, by the methanization reactor (428), hydrogen (H₂) produced from an electrolysis process;
converting, by the methanization reactor (428), the CO₂ and the H₂ via methanization reaction to produce methane (CH₄); and
supplying, by the methanization reactor (428), the CH₄ to at least one the carbon/carbon (C/C) preform production process or another system for heat generation.

9. The method of claim 8, further comprising:
utilizing, by an H₂ generator (442), electric power to electrolyze first water (H₂O) into the H₂.

10. The method of claim 9, further comprising:
separating, by a separator (424), the CO₂ from byproducts and provide the CO₂ to the methanization reactor (428).

11. The method of claim 10, further comprising:
providing, by the separator (424), remaining byproducts separated from the byproducts to a steam removal mechanism (432);
removing, by the steam removal mechanism (432), first steam from the remaining byproducts; and
supplying, by the steam removal mechanism (432), the first steam to a condenser.

12. The method of claim 11, further comprising:
producing, by the methanization reactor (428), second steam;
supplying, by the methanization reactor (428), the second steam to the condenser;
condensing, by the condenser, the first steam and the second steam to the first H₂O; and
supplying, by the condenser, the first H₂O to the H₂ generator (442), and/or further comprising:
removing, by the steam removal mechanism (432), nitrogen (N₂) from the remaining byproducts; and
releasing, by the steam removal mechanism (432), the N₂ into an atmosphere.

13. The method of claim 12, further comprising:
generating, by a burner/steam generator (406), the byproducts from off gases; and
supplying, by the burner/steam generator (406), the byproducts to the separator (424).

14. The method of claim 13, further comprising:
generating, by the burner/steam generator (406), third steam; and
supplying, by the burner/steam generator (406), the third steam to at least one steam utilization mechanism, and optionally further comprising:
supplying, by the at least one steam utilization mechanism, unused steam to a steam condenser;
condensing, by the steam condenser, the unused steam to second H₂O; and
supplying, by the steam condenser, the second H₂O to the burner/steam generator (406).

15. The method of claim 13, further comprising:
utilizing, by the H₂ generator (442), the electric power to electrolyze first water (H₂O) into oxygen O₂, wherein the O₂ from the H₂ generator (442) is proportionally added to air utilized by the burner/steam generator (406).
